# EUROPÄISCHE PATENTSCHRIFT

(11) **EP 1 203 938 B1**
(45) Veröffentlichungstag und Bekanntmachung des Hinweises auf die Patenterteilung: **05.02.2003**
(21) Anmeldenummer: 01120954.1
(22) Anmeldetag: 31.08.2001
(51) Int. Cl.: G01M 1/34, G01M 1/38, B23Q 17/12

(54) **Verfahren zur Beseitigung einer Unwucht eines rotierenden Werkstückes**
Method of elimination of imbalance of a rotating workpiece
Procédé pour l'élimination du balourd d'une pièce tournante

(30) Priorität: 03.11.2000 DE 10054689
(43) Veröffentlichungstag der Anmeldung: 08.05.2002
(73) Patentinhaber: Hüller Hille GmbH, 71636 Ludwigsburg (DE)
(72) Erfinder: Noss, Hans, 65307 Bad Schwalbach (DE); Kellert, Hans-Dieter, 65232 Taunusstein (DE)
(74) Vertreter: Dahlkamp, Heinrich-Leo, Dipl.-Ing.

(56) Entgegenhaltungen:
- EP-A- 0 800 884
- DE-A- 2 335 542
- FR-A- 1 085 467
- US-A- 3 817 149
- US-A- 5 333 500

## Beschreibung

Die Erfindung bezieht sich auf ein Verfahren zur Beseitigung einer Unwucht eines rotierenden Werkstückes, insbesondere einer Aluminium-Felge eines Kraftfahrzeuges, wobei das Werkstück während der Drehbearbeitung auf einer rotierenden Spindel einer Drehmaschine mit einem oder mehreren Spannfuttern auf der Spindel aufgespannt ist und die Unwucht des noch auf der Spindel aufgespannten Werkstückes nach Betrag und Winkellage ermittelt und gespeichert wird und zur Beseitigung der Unwucht ein Werkstoffbereich vom Werkstück entfernt wird, gemäß dem Oberbegriff des Patentanspruchs 1, wie aus DE 25 35 542 A1 bekannt.

Zur Feststellung einer Unwucht und zur Beseitigung dieser Unwucht gibt es verschiedene Systeme.

Aus DE 197 43 578 A1 ist ein Verfahren zum Auswuchten eines Rotationskörpers bekannt, bei dem ein Wuchtapparat eine Verstelleinheit zum Verstellen von Kompensationsmassen aufweist. Bei diesem sogenannten Ringwuchtsystem werden zunächst die Kompensationsmassen in ihre Nullposition gebracht, in denen sich die von ihnen erzeugten Unwuchtvektoren gegenseitig aufheben. Dann wird in an sich bekannter Weise der dann vorhandene Unwuchtvektor nach Größe und Richtung gemessen und anschließend für wenigstens eine der Kompensationsmassen um einen beliebigen Winkel oder ihr Abstand von der Rotationsachse verstellt und diese Verstellung erfasst. Um den Auswuchtvorgang durchzuführen, werden die Kompensationsmassen aus den Nullpositionen derart verfahren, dass der Unwuchtvektor kompensiert wird. Dieses Auswuchtsystem ist insbesondere für das automatische Auswuchten z.B. auch von Werkzeugspindeln vorgesehen, um einen schwingungsfreien Betrieb einer Werkzeugmaschine zu gewährleisten. Eine Bearbeitung der ausgewuchteten Spindel ist dabei nicht vorgesehen.

Aus EP 754 937 A2 ist ein Verfahren und eine Vorrichtung zum Wuchten von Prüflingen bekannt, wobei der Prüfling in ein Futter einer Spindel aufgenommen und in Umdrehung versetzt wird. Spiegelbildlich zu dieser Spindel ist eine zweite Spindel angeordnet, die ein Schneidwerkzeug antreibt. Prüfling und Schneidwerkzeug werden mit gleicher Drehzahl angetrieben und zur Beseitigung der Unwuchtmasse wird das Schneidwerkzeug zyklisch in Richtung auf das Werkstück hin- und herbewegt. Die Synchronisierung der Bewegungen von Werkstück und Werkzeug ist hierbei aufwendig.

In der eingangs genannten DE 23 35 542 A1 ist ein Verfahren beschrieben, bei dem auf einer Drehmaschine die rotierenden Werkstücke vor oder nach ihrer Formgebung vorzugsweise dynamisch ausgewuchtet werden. Dabei wird bei vorgegebener Drehzahl die Lage und/oder Größe der Unwucht in zwei Ausgleichsebenen durch Schwingungsmessung an zwei Messstellen ermittelt und die Unwucht in den beiden Ausgleichsebenen durch einseitige Materialabnahme mittels auf einem Schlitten der Bearbeitungsmaschine gehaltener Bearbeitungswerkzeuge oder durch Anbringen von Zusatzmassen ausgeglichen. Zur Materialabnahme ist dabei beispielsweise ein Bohrer vorgesehen, der bei stillstehendem Werkstück betätigt wird. Durch diese Anbringung von Bohrungen besteht die Gefahr, dass die Stabilität des Werkstückes beeinflusst wird.

Aus DE-AS 22 31 226 ist ein Verfahren zum zerspanenden Unwuchtausgleich an Rotationskörpern bekannt, wobei mittels eines beweglichen Fräsers bei unverschobenem Werkstück ein sichelförmiger Bereich entfernt wird.

In DE-AS 12 02 533 ist eine Einrichtung zum Wuchtzentrieren von Umlaufkörpern beschrieben, wobei beim Wuchtzentrieren eine bezüglich der Trägheitsachse verschobene Wuchtkörperachse entsprechend an ihren Betriebslagerstellen abgefräst wird.

In GB 22 70 887 A ist beschrieben, eine Aluminiumfelge an ihrer Schulter zu bearbeiten.

In GB 1 077 134 wird schließlich ein Spannfutter zur Einstellung einer gewünschten Drehachse beschrieben.

Der Erfindung liegt die Aufgabe zu Grunde, ein Verfahren zur Beseitigung einer Unwucht eines rotierenden Werkstückes vorzuschlagen, das weniger aufwendig ist, die Unwucht in möglichst wenig Arbeitsgänge in möglichst kurzer Zeit beseitigt und einen schnellen automatischen Wechsel des Werkstückes ermöglicht.

Die Lösung dieser Aufgabe ist im Patentanspruch 1 angegeben. Die Unteransprüche 2 bis 6 enthalten sinnvolle ergänzende Verfahrensschritte.

Es ist vorgesehen, dass das Werkstück zunächst fertiggedreht und anschließend in ein und derselben Drehmaschine die verbliebene Unwucht durch Abdrehen beseitigt wird. Dazu wird nach der Drehbearbeitung die Unwucht des noch auf der Spindel aufgespannten Werkstückes, vorzugsweise mit Hilfe eines auf der Spitze der Spindel montierten an sich bekannten Ringwuchtsystemes oder sonstiger Wuchtaufnehmer und eines damit verbundenen Messrechners, nach Betrag und Winkellage ermittelt und gespeichert. Anschließend wird erfindungsgemäß das Werkstück aus der Drehachse der Spindel um den zuvor ermittelten Unwuchtbetrag in eine Position exzentrisch auf der Spindel verschoben und dort verspannt. Vorzugsweise mit demselben Werkzeug, mit dem auch die vorherige Drehbearbeitung durchgeführt wurde, wird dann zur Beseitigung der Unwucht ein sichelförmiger Werkstoffbereich vom Werkstück abgedreht. Zur Verschiebung des Werkstückes, vorzugsweise in einer Richtung senkrecht zur Spindelachse wird das Werkstück durch eine vorzugsweise als Haltedorn zentral angreifende Haltevorrichtung festgehalten und nach Lösen des Spannfutters, vorzugsweise in einer linearen Bewegung in X-Richtung um den erforderlichen Betrag verschoben. Nachdem das Werkstück in dieser neuen Position exzentrisch auf der Spindel verspannt ist, wird die Haltevorrichtung wieder gelöst und der erforderliche sichelförmige Werkstoffbereich abgedreht.

Es hat sich als günstig erwiesen, für die normale Drehbearbeitung das Werkstück mit einem ersten zentral angreifenden Spannfutter zentrisch auf der Spindel zu verspannen und mit Spannbacken eines zweiten Spannfutters, die sich am Umfang des Werkstückes radial nach innen und/oder außen gerichtet anlegen, zusätzlich zu fixieren. Dieses zweifache Spannsystem ist aus EP 800 884 A2 bekannt. Bei dem anschließenden Abdrehen der Unwucht wird das erste Spannfutter nicht benötigt und das Werkstück kann mit Hilfe der vorzugsweise unabhängig voneinander verschiebbaren Spannbacken des zweiten Spannfutters exzentrisch auf der Spindel verspannt werden. Es hat sich gezeigt, dass zur Beseitigung des relativ geringen sichelförmigen Werkstoffbereiches diese einfache Verspannung ausreicht.

Bei dem erfindungsgemäßen Verfahren kann insbesondere nach Ermittlung der Unwucht mit Hilfe des auf der Spindel montierten Ringwuchtsystemes oder sonstiger Wuchtaufnehmer durch Verdrehen der Spindel und damit auch des Werkstückes der abzudrehende Werkstoffbereich in eine definierte Lage gegenüber dem Werkzeug gedreht werden, sodass nach der anschließenden linearen Verschiebung bei Drehen der Spindel durch die exzentrische Anordnung des Werkstückes nur der erforderliche Unwuchtbereich mit Hilfe des feststehenden Werkzeuges abgedreht wird.

Die Halteeinrichtung zur Verschiebung des Werkstückes in die exzentrische Lage kann erfindungsgemäß an dem Werkzeughalter, vorzugsweise dem Werkzeugrevolver, oder an einem vorzugsweise in Z- und X-Richtung verfahrbaren Schlitten angeordnet sein.

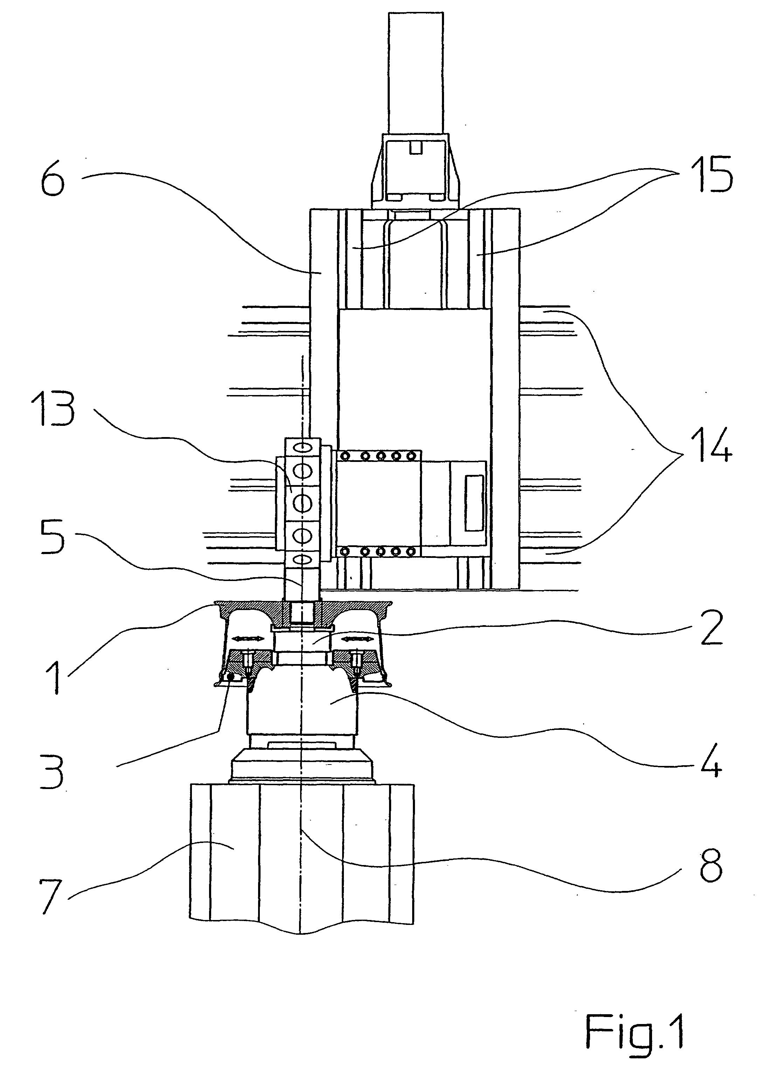

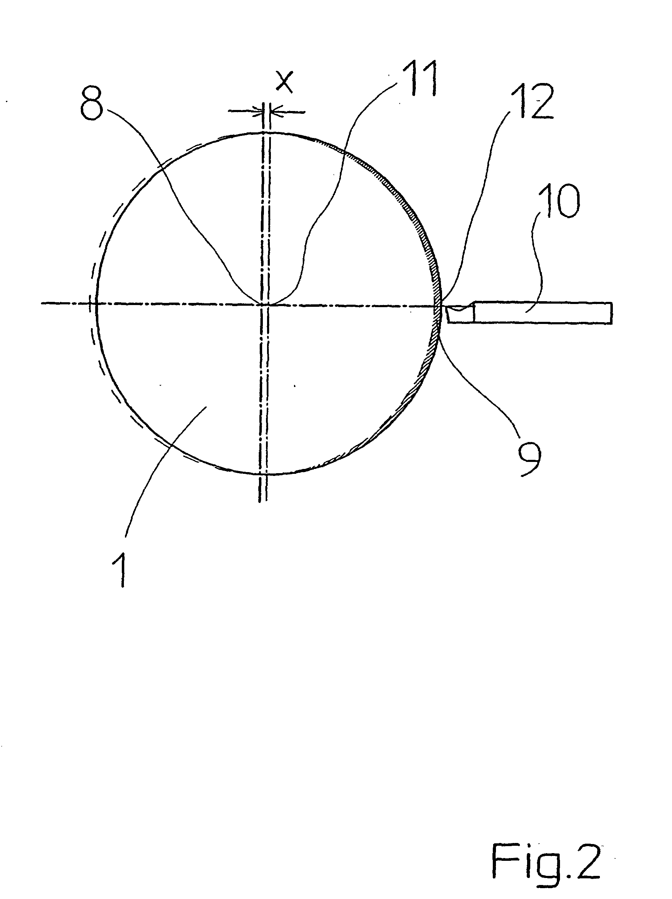

Die Erfindung wird anhand der beigefügten Figuren 1 und 2 beispielsweise näher erläutert.
- Fig. 1: zeigt eine Seitenansicht eines Teils einer Vorrichtung zur Durchführung des Verfahrens.
- Fig. 2: zeigt einen Schnitt durch ein Werkstück 1, wobei die exzentrische Einspannung mit durchgezogener und die zentrische Einspannung des Werkstückes mit gestrichelter Linie dargestellt ist.

Nach Fig. 1 ist die senkrecht angeordnete Spindel 7 mit ihrer Drehachse 8 nur teilweise dargestellt. Auf dieser Spindel 7 ist das Werkstück 1, z.B. eine Aluminiumfelge eines Kraftfahrzeuges mit einem ersten Spannfutter 2 zentrisch gespannt. Die Spannbacken 3 eines zweiten Spannfutters 4 legen sich von innen an den Felgenmantel an (vgl. die beiden Doppelpfeile), um ein Aufschwingen oder Verformen durch die Bearbeitungskräfte zu verhindern. Das Werkzeug zur Bearbeitung des Werkstückes 1 ist in Fig. 1 nicht dargestellt. Es ist aber in üblicher Weise an dem Werkzeugrevolver 13 angeordnet. Nach Beendigung der Drehbearbeitung wird die Unwucht des Werkstückes 1 nach Betrag und Winkellage mittelt eines auf der Spitze der Spindel montierten Ringwuchtsystemes oder sonstiger Wuchtaufnehmer und eines Messrechners (beides in Fig. 1 nicht dargestellt) ermittelt. Fig. 1 zeigt aber die am Werkzeugrevolver 13 befestigte, als Haltedorn ausgebildete Halteeinrichtung 5, die in die Mittelbohrung des Werkstückes 1 eingefahren ist. Wenn die beiden Spannfutter 2, 4 gelöst sind, wird nur das Werkstück 1 durch Verfahren des X-Schlittens 6 auf den horizontalen Führungsschienen 14 aus der Drehachse 8 der Spindel 7 um den zuvor berechneten Betrag X (vgl. Fig. 2) verschoben. Wahlweise ist auch ein konstanter Verschiebebetrag einstellbar, wobei dann der Abtrag der Unwucht über die Spantiefe errechnet wird. In der verschobenen Position wird das Werkstück 1 nur durch das zweite Spannfutter 4 exzentrisch auf der Spindel 7 verspannt. Das Spannfutter 2 bleibt geöffnet. Der am Werkzeugrevolver 13 befestigte Haltedorn als Halteeinrichtung 5 wird durch senkrechte (Z-Richtung) Verschiebung des Z-Schlittens (ohne Bezugszeichen) auf den vertikalen Führungsschienen 15 aus der Mittelbohrung des Werkstückes 1 ausgefahren.

In der Fig. 2 ist der abzudrehende Werkstoffbereich 9 des Werkstückes 1 schraffiert dargestellt. Nach Verschiebung des Werkstückes 1 um den Betrag X oder den konstanten Verschiebebetrag ist der Werkstückmittelpunkt 11 entsprechend verschoben, sodass das Werkstück 1 exzentrisch auf der Spindel 7 angeordnet ist. Bei Drehung der Spindel 7 um die Drehachse 8 wird damit angefangen bei der maximalen Ausdehnung 12, mit Hilfe des Werkzeuges 10 der erforderliche Werkstoffbereich 9 abgedreht.

### Bezugszeichenliste:

- 1: Werkstück
- 2: erstes Spannfutter
- 3: Spannbacken
- 4: zweites Spannfutter
- 5: Halteeinrichtung, Haltedorn
- 6: X-Schlitten
- 7: Spindel
- 8: Drehachse der Spindel 7
- 9: abzudrehender Werkstoffbereich
- 10: Werkzeug
- 11: Werkstückmittelpunkt
- 12: maximale Ausdehnung des abzudrehenden Werkstoffbereichs
- 13: Werkzeugrevolver
- 14: horizontale Führungsschienen für den X-Schlitten
- 15: vertikale Führungsschienen für den Z-Schlitten

## Patentansprüche

1. Verfahren zur Beseitigung einer Unwucht eines rotierenden Werkstückes (1), insbesondere einer Aluminium-Felge eines Kraftfahrzeuges, wobei das Werkstück (1) während der Drehbearbeitung auf einer rotierenden Spindel (7) einer Drehmaschine mit einem oder mehreren Spannfuttern (2, 4) auf der Spindel (7) aufgespannt ist und die Unwucht des noch auf der Spindel (7) aufgespannten Werkstückes (1) nach Betrag und Winkellage ermittelt und gespeichert wird und zur Beseitigung der Unwucht ein Werkstoffbereich (9) vom Werkstück (1) entfernt wird, **dadurch gekennzeichnet, dass** nacheinander
- nach Feststellung und Speicherung der Unwucht des auf der Spindel (7) aufgespannten Werkstückes (1) das Werkstück (1) durch eine Halteeinrichtung (5) festgehalten wird,
- das oder die Spannfutter (2, 4) gelöst werden,
- das Werkstück (1) mit Hilfe der Halteeinrichtung (5) aus der Drehachse (8) der Spindel (7) um den zuvor ermittelten Betrag (X) oder einen konstanten Betrag verschoben wird,
- das Werkstück (1) in der neuen Position exzentrisch auf der selben Spindel (7) gespannt wird,
- die Halteeinrichtung (5) gelöst wird und
- zur Beseitigung der Unwucht ein sichelförmiger Werkstoffbereich (9) vom Werkstück (1) abgedreht oder in sonstiger Weise entfernt wird.

2. Verfahren nach Anspruch 1, **dadurch gekennzeichnet, dass** das Werkstück (1) von einem ersten zentral angreifenden Spannfutter (2) zentrisch gespannt wird und dass die Spannbacken (3) eines zweiten Spannfutters (4) sich am Umfang des Werkstückes (1) radial nach innen und/oder außen gerichtet anlegen, um ein Aufschwingen oder Verformen durch die Bearbeitungskräfte zu verhindern.

3. Verfahren nach Anspruch 1, **dadurch gekennzeichnet, dass** die Unwucht des Werkstückes (1) mittels eines auf der Spitze der Spindel (7) montierten Ringwuchtsystemes oder sonstiger Wuchtaufnehmer und eines damit verbundenen Messrechners ermittelt wird.

4. Verfahren nach Anspruch 3, **dadurch gekennzeichnet, dass** nach Ermittlung der Unwucht der abzudrehende Werkstoffbereich (9) des Werkstückes (1) durch Verdrehen der Spindel (7) in eine definierte Lage gegenüber dem Werkzeug (10) gebracht wird.

5. Verfahren nach Anspruch 1, **dadurch gekennzeichnet, dass** die Halteeinrichtung (5) aus einem am Werkzeughalter oder an einem Z-Schlitten befestigten Haltedorn besteht, der in eine Mittelbohrung des Werkstückes (1) eingefahren wird.

6. Verfahren nach Anspruch 2, **dadurch gekennzeichnet, dass** die exzentrische Verspannung des Werkstückes (1) in der neuen Position nur mit Hilfe des zweiten Spannfutters (4) erfolgt und dass dabei die Spannbacken (3) unabhängig voneinander verschiebbar sind.

## Claims

1. A method for elimination of an imbalance of a rotating workpiece (1), especially of an aluminum wheel rim of a motor vehicle, with the workpiece (1) being chuck on the spindle (7) during the turning process on a rotating spindle (7) of a lathe by means of one jaw chuck or more (2,4) and the imbalance of the workpiece (1) still chucked on the spindle (7) being determined and saved by amount and angular position, and with removing a material area (9) from the workpiece (1) to eliminate the imbalance, **characterized in that** consecutively
- after determination and saving of the imbalance of the workpiece (1) chucked on said spindle (7) the workpiece (1) is held in place by a holding device (5);
- the jaw chuck (2,4) is (are) relaxed;
- the workpiece (1) is displaced by the aid of the holding device (5) from the axis of rotation (8) of the spindle (7) by the pre-determined amount (X) or by a constant amount;
- the workpiece (1) is clamped in the new position eccentrically on the spindle (7);
- the holding device (5) is relaxed, and
- a sickle-shaped material area (9) is turned-off from the workpiece (1) or removed in another way in order to eliminate the imbalance.

2. A method pursuant to claim 1, **characterized in that** the workpiece (1) is centrally clamped by a first centrally attacking jaw chuck (2) and that the clamping jaws (3) of a second jaw chuck (4) rest at the circumference of the workpiece (1) radially in inward or outward direction in order to prevent swinging-up or deformation due to machining forces.

3. A method pursuant to claim 1, **characterized in that** the imbalance of the workpiece (1) is determined by means of a ring balancing system mounted on the tip of the spindle (7) or by other balancing pick-ups and a measuring computer linked to it.

4. A method pursuant to claim 3, **characterized in that** after determination of the imbalance the material area (9) of the workpiece (1) to be turned-off is brought into a defined position versus the tool (10) by turning the spindle (7).

5. A method pursuant to claim 1, **characterized in that** the holding device (5) is comprised of a tool holder or a holding mandrel affixed to a Z-cradle, said holding mandrel being extended into a center bore of the workpiece (1).

6. A method pursuant to claim 2, **characterized in that** the eccentric clamping of the workpiece (1) in the new position is effected only by the aid of the second jaw chuck (4) and that the clamping jaws (3) are displaceable independently from each other.

## Revendications

1. Procédé pour l'élimination du balourd d'une pièce tournante (1), en particulier d'une jante en aluminium d'un véhicule, la pièce (1) étant serrée pendant l'usinage sur tour sur la broche tournante (7) d'un tour à l'aide d'un ou de plusieurs mandrins de serrage (2, 4) sur la broche (7), la valeur et la position relative du balourd de la pièce (1) encore serrée sur la broche (7) étant déterminées et mémorisées, et une zone de la matière (9) de la pièce (1) étant enlevée pour éliminer le balourd, **caractérisé en ce que,** dans l'ordre suivant
- après constatation et mémorisation du balourd de la pièce (1) serrée sur la broche (7), la pièce (1) est maintenue par un dispositif de retenue (5),
- le ou les mandrin(s) de serrage est/sont desserré(s),
- la pièce (1) est déportée de l'axe de rotation (8) de la broche (7) de la valeur (X) déterminée auparavant ou d'une valeur constante,
- la pièce (1) est serrée excentriquement dans la nouvelle position sur la même broche (7),
- le dispositif de retenue (5) est desserrée et
- une zone de matière falciforme (9) de la pièce (1) est enlevée par tour ou enlevée d'une tout autre manière pour éliminer le balourd.

2. Procédé selon la revendication 1, **caractérisé en ce que** la pièce (1) est serrée centralement par un premier mandrin de serrage (2) attaquant au centre et que les mors de serrage (3) d'un deuxième mandrin de serrage (4) s'appuient sur le pourtour de la pièce (1) radialement vers l'intérieur et/ou sont orientés vers l'extérieur pour empêcher une vibration ou une déformation par les efforts d'usinage.

3. Procédé selon la revendication 1, **caractérisé en ce que** le balourd de la pièce (1) est déterminé à l'aide d'un système d'équilibrage annulaire monté sur la pointe de la broche (7) ou de tout autre équilibreur et d'un ordinateur de mesure qui y est relié.

4. Procédé selon la revendication 3, **caractérisé en ce qu**'après détermination du balourd, la zone de matière (9) à enlever par tour de la pièce (1) est amenée dans une position définie par rapport à l'outil (10) par rotation de la broche.

5. Procédé selon la revendication 1, **caractérisé en ce que** le dispositif de retenue (5) est constitué d'un mandrin de retenue fixé au porte-outils ou à un coulant en Z et qui est rentré dans un perçage central de la pièce.

6. Procédé selon la revendication 2, **caractérisé en ce que** le serrage excentrique de la pièce (1) n'est effectué dans la nouvelle position qu'avec l'aide du deuxième mandrin de serrage (4) et que les mors de serrage sont déplaçables indépendamment l'un de l'autre.
